# EUROPEAN PATENT APPLICATION

(11) **EP 1 686 054 A1**
(43) Date of publication of application: **02.08.2006**
(21) Application number: 05021484.0
(22) Date of filing: 30.09.2005
(51) Int. Cl.: B62K 21/14

(54) **Handlebar shock absorbing system for bicycles**

(30) Priority: 26.01.2005 JP 2005018516; 06.04.2005 US 99307; 04.04.2005 CA 2502486
(71) Applicant: You, Yen-Jen, Richmond BC V7A 4H1 (CA)
(72) Inventor: You, Yen-Jen, Richmond BC V7A 4H1 (CA)
(74) Representative: DTS Zürich

(57) **Abstract**

A handlebar shock absorbing system for bicycles, comprising a pair of side plates (16c,16d) attached to a handlebar mounting bracket (16), with rotational movement of a handlebar (12) against a torsional spring. The handlebar (12) can be adjustable for torsional spring force and/or for rotational travel and positioning of handlebar grips, either forward or rearward tilting.

## Description

### Field of the Invention

The invention relates to a bicycle handlebar mounting system, and more specifically to a variably adjustable shock-absorbing handlebar mounting system utilizes an adjustable torsional spring force.

### Background of the Invention

In order to reduce shock and help prevent injuries, currently the bicycle industry has been providing a number of solutions, such as springs or liquid type shock-absorber within the front fork, springs installed under the seat, shock-absorber and springs installed under the upper frame tube. Although, the above solutions do achieve some shock-absorbing effect, cyclists still suffer injuries.

When shock occurs on an uneven road, the cyclist generally grips more firmly which can increase the likelihood of some injuries. The fixed link between the handlebar and the handlebar stem seems to be one of the main causes of certain injuries. By making the present invention much more adjustable for various types of cycling and a wide range of cyclists' desires, the present invention will be more likely to take hold in the market place thereby becoming more available to consumers and thereby reducing certain injuries causes that the industry seems to continue to overlook.

Various types of shock-absorbing handlebar mounting systems are already known. Some of these are listed below;

Inventors are aware of United States Patent 367,368 issued to J.S. Copeland Aug. 2, 1887, entitled "Velocipede". Inventors are also aware of United States Patent 626,602 issued to J. T. Fenton , et al. on June 6, 1899, entitled "Bicycle Handle Bar". Inventors are also aware of United States Patent 5,181,436 issued to Lai on January 26, 1993 entitled "Stem for interconnecting a handlebar and a head tube of a bicycle". Inventors are also aware of United States Patent 5,660,406 issued to Menze, sen. on August 26, 1997, entitled "Sprung steering system front structure for bicycles". Inventors are also aware of United States Patent 5,887,490 issued to Dittmar on March 30, 1999, entitled "Adjustable handlebar stem using a locking pin system".

The above patents, although useful, do not cover the specific application and process of the present invention. Bicycles are a multiple-purpose vehicle for transportation, sports, and recreational activities and consumers and thus bicycle manufacturers don't readily progress to certain improvements, unless these improvements are more variably adaptable.

### Summary of the Invention

It is therefore an object of the present invention to minimized handlebar shock and to improve the cyclist's biking comfort.

Another object of the present invention is to allow flexible choices of spring force, based on the cyclist's riding habit and the length of handlebar grips, the spring force can be adjusted to his or her preference.

It is also an object of the present invention to allow various choices of the pull-up/push-down range of the handlebar grips, so cyclist can adjust the grips' pull-up/push-down range he or she enjoys most, for both forward and backward tilting handlebar grips

It is yet another object of the present invention to minimized cyclist's potential injury related to ridged handlebars.

The present invention mainly includes a handlebar, one pair of handlebar grips, one handlebar bracket. The handlebar bracket is installed onto a standard bicycle handlebar stem. The handlebar bracket connects the handlebar through a hole in each of two opposing mounting plates. The handlebar is mounted in this way to allow it to rotate within the holes on the two opposing mounting plates.

A torsion spring fits between the two opposing mounting plates and the handlebar slides through the spring. A torsion bracket is mounted on the handlebar in -between the torsion spring coils. The spring coils have an adjoining end fixed to the end of the torsion bracket and the spring has two other ends fixed firmly to spring positioning bolts. The spring positioning bolts are fixed into open slots on the opposing mounting plates of the handlebar stem bracket.

On the first embodiment of the present invention there are a number of opposing slots or holes around each side plate for the adjustment of the spring positioning bolts. The spring poisoning bolts can be fixed in a different pair of slots depending on the desired spring tension.

On a second embodiment of the present invention there is a pair of opposing radial slots, one on each side plate for the adjustment of the spring positioning bolts. The spring poisoning bolts can be fixed anywhere along the radial slot pair depending on the desired spring tension.

The opposing side plates include two limiting bolts for contact of the torsion bracket. The top bolt limits the upward travel of the handlebar and a lower bolt limits the lower extent of the handlebar travel. The lower limiting bolt has an opposing slot, one on each side of the opposing side plates. The lower slot allows the adjustment of the allowable downward travel of the handlebar.

It is further an object of the present invention to allow a mechanism for non spring load adjustment capability when adjusting the tension of the torsion spring mechanism of the shock absorbing system.

The handlebar mounting bracket and its two opposing side plates can be reversed on a bicycle handlebar stem for functioning either when using a rearward or a forward tilting handlebar.

The substantially perpendicular handlebar grips are installed at certain angles on the handlebar and can be positioned at any angle as the cyclist may desire, from level, to up or down, or a forward tilting angle, to increase cyclist's comfort. As well the rotation of the handlebar against the torsion spring will absorb much of the bicycle's shock to minimize the negative impact to a cyclist's wrists, elbows, shoulders and body.

In one aspect the present invention may be characterized as a handlebar shock absorber which includes a handlebar pivotally mounted to a mounting bracket for rotation of the handlebar between a rest position and a depressed position, where the mounting bracket is rigidly mountable to the upper end of a handlebar stem so that an axis of rotation of the handlebar is substantially co-axial with a longitudinal axis of the handlebar. Thus, rotation of the handlebar is about the longitudinal axis. A resilient biasing means is mounted to, so as to cooperate between, the handlebar and the mounting bracket. The resilient biasing means resiliently biases the handlebar into the rest position and resiliently urges the handlebar to return to the rest position when the handlebar is rotated towards the depressed position.

Advantageously the resilient biasing means is a spring having first and second opposite ends, where the first end of the spring is rigidly mounted to the handlebar, the second end of the spring is rigidly mounted to the mounting bracket. In a preferred embodiment, the second end of the spring is adjustably mountable to the mounting bracket. That is, the mounting bracket is adapted to receive the second end adjustably mounted thereto, along a range of selectively mountable mounting locations on the mounting bracket between a first mounting location wherein the spring is at a lower pre-tension and a second mounting location wherein the spring is at a higher pre-tension when the handlebar is in the rest position. Thus, spring resistance to rotation of the handlebar is variably and selectively adjusted by mounting of the second end of the spring between the first and second mounting locations.

As better described below, the spring may be a helical coil torsion spring and the handlebar may be journalled through the coil. Further, the mounting locations on the mounting bracket may be a radially spaced apart array of mounting locations radially spaced apart about the axis of rotation of the handlebar and the mounting bracket may include a U-shaped member in which case the spring may be mounted sandwiched within the U-shaped member. A base of the U-shaped member may be mountable to the handlebar stem and a pair of arms of the U-shaped member may extend from the base sandwiching the spring therebetween. The array of mounting locations may be formed in at least one of the arms of the pair of arms, and may lie in a substantially vertical plane. The array of mounting locations may be an array of radially extending slots or holes, for example an array of radially extending open ended slots each opening outwardly of the mounting bracket.

In one embodiment a lever arm may be rigidly mounted to the handlebar. The first end of the spring may be mounted to a distal end of the lever arm, distal from the handlebar. Upper and lower travel stops may be mounted to the mounting bracket so that the distal end of the lever arm is limited to translate in rotation about the axis of rotation between the travel stops. At least one of the travel stops may be selectively adjustable to vary a travel range of motion of the distal end of the lever arm between the travel stops.

### Brief Description of the Drawings

Advantages of the present invention will become more fully appreciated as the same becomes better understood when considered in conjunction with the following detailed description of an illustrative embodiment and accompanying drawings, in which like reference characters designate the same or similar parts throughout the several views, and wherein;
Figure 1 is a perspective exploded view of the preferred embodiment showing each component of the invention.
Figure 2 is a perspective view of the invention.
Figure 3 is a partial sectional view taken along line 3-3 in Figure 2.
Figure 4 is a partial sectional view of the view of Figure 3 showing the downwards rotation of the handlebar from a substantially level, rearward lowered position.
Figure 5 is the sectional view of Figure 4 showing the downwards rotation of the handlebar against the return biasing force of the torsion spring.
Figure 6 is the sectional view of Figure 4 showing an adjustment to limit the lower rotational range of the handlebar by the raising of the lower limiting bolt.
Figure 7a is the sectional view of Figure 4 showing adjustment of the spring stiffness.
Figure 7b is the sectional view of Figure 7a showing the completed adjustment to increase the spring stiffness and with the upper limiting bolt re-installed.
Figure 8 is a sectional view showing an inverted installation of the handlebar bracket for use with forward-tilting handlebar grips.
Figure 9 is a perspective view showing an alternate type of handlebar grip.
Figure 10 is an exploded perspective view showing each component of the alternate of Figure 9.
Figure 11 is a perspective view showing an alternate embodiment where the shock absorbing mechanism is mounted directly on top of the bicycle stem.
Figure 12 is an exploded perspective view showing each component of the alternate of Figure 11.
Figure 13 and 14 are a side view of the mounting bracket, showing the alternate embodiment of Figure 11 showing alternate torsion spring adjustment means, also with the shock absorbing mechanism mounted directly on top of the bicycle stem.
Figure 15a and 15b are side partial sectional views showing the alternate embodiment of Figure 11 showing the rotation range of the handlebar against the return biasing force of the torsion spring the shock absorbing mechanism is mounted directly on top of the bicycle stem and shown in the rearward facing position.
Figure 16a and 16b are side partial sectional views showing the alternate embodiment of Figure 11 showing the rotation range of the handlebar against the return biasing force of the torsion spring the shock absorbing mechanism is mounted directly on top of the bicycle stem and shown in the forward tilting position.
Figure 17 is a perspective view showing the alternate embodiment of Figure 13 showing an alternate torsion spring adjusting attachment mechanism.
Figure 18 is a side view of a traditional bicycle with various different shock-absorbing means built into a bicycle frame.

### Detailed Description of Embodiments of the Invention

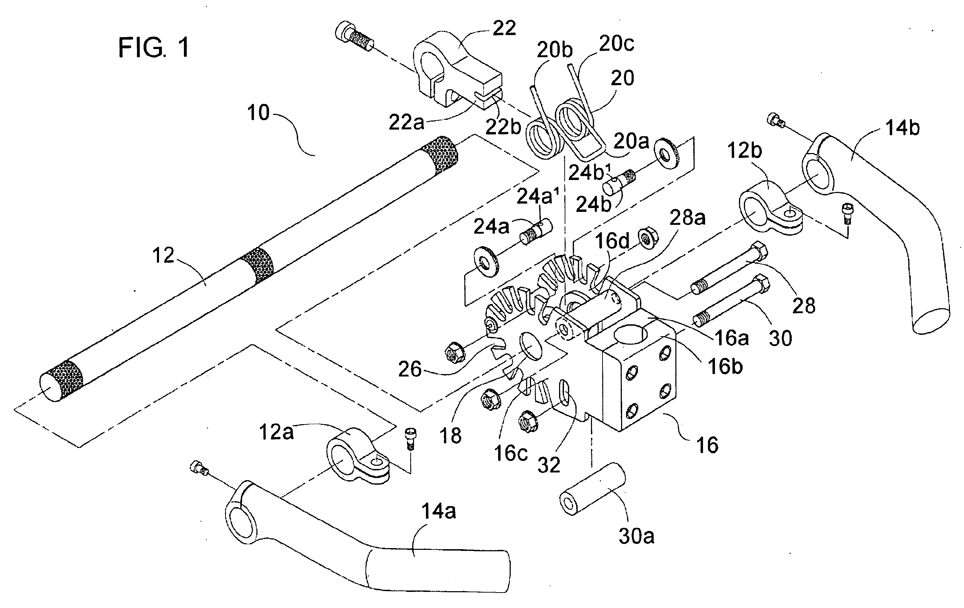

The handlebar shock-absorbing system is generally referred to as 10. As shown in FIG. 1 in exploded schematic view, one embodiment of the handlebar shock-absorbing system 10 includes a handlebar 12, a pair of handlebar grips 14a and 14b, and a handlebar stem mounting bracket 16. The handlebar mounting bracket 16 has a split mounting block 16a and 16b so as to be easily mounted onto a handlebar stem.

Handlebar 12 is pivotally or rotatably mounted to handlebar mounting bracket 16 through apertures 18, one in each of two opposing parallel mounting plates 16c and 16d extending forwardly from handlebar mounting bracket 16. Torsion spring 20 is mounted between opposing side plates 16a and 16b. The torsion spring 20 is a helical coiled torsion spring, the torsion spring 20 is aligned and sized so as to slide over handlebar 12 when handlebar 12 is mounted through apertures 18.

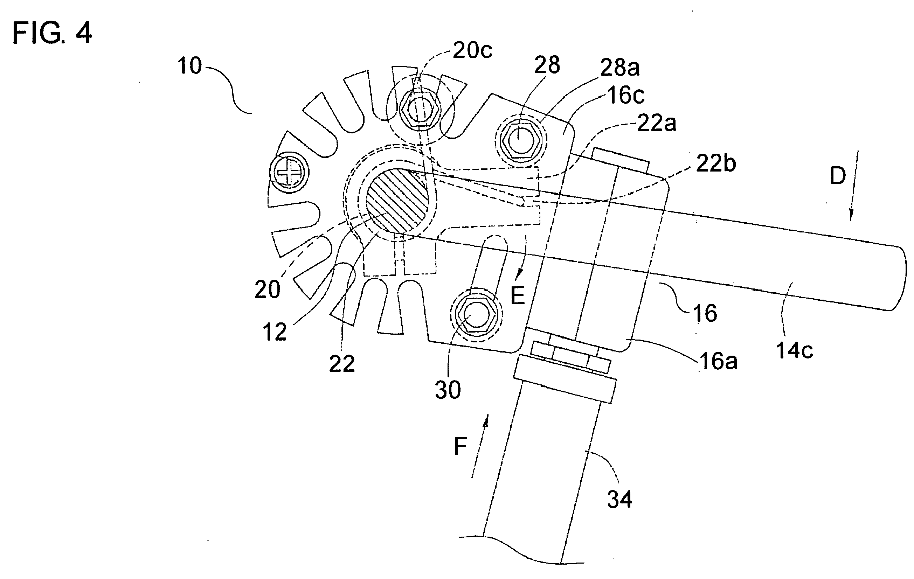

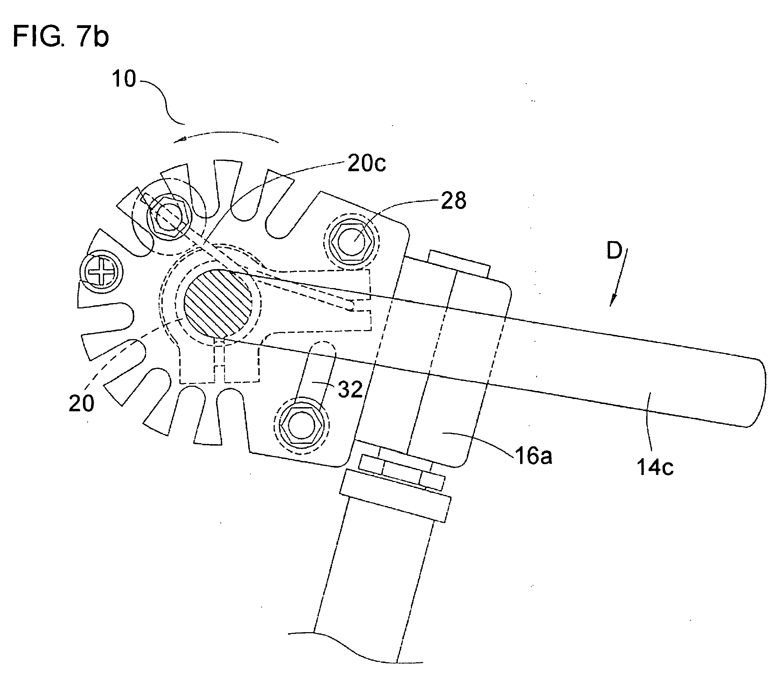

A handlebar torsion bracket 22 is rigidly mounted on handlebar 12, for example as illustrated set within torsion spring 20 so as to be sandwiched between ends 20b and 20c and corresponding helical segments of spring 20. Handlebar torsion bracket 22 includes an adjoining end 22a cantilevered from the body of bracket 22. An end 20a of spring 20 opposite to ends 20b and 20c is mounted into a slot 22b in the distal end of torsion bracket end 22a. Thus spring end 20a is rigidly anchored to handlebar 12 so that spring end 20a rotates as handlebar 12 is rotated about axis of rotation 13. Spring ends 20b and 20c mount to spring positioning bolts 24a and 24b by journaling of ends 20b and 20c through apertures 24a' and 24b' respectively. Spring positioning bolts 24a and 24b are selectively mounted into one opposing pair of slots 26 in the radially spaced array of open slots 26 on side plates 16c and 16d radially spaced about center of handlebar axis. With spring ends 20b and 20c, mounted into apertures 24a' and 24b' in spring positioning bolts 24a and 24b, spring positioning bolts 24a and 24b may be slotted into any opposing pair of slots 26 to adjust desired spring tension of spring 20. Thus as seen in Figures 4-6, spring ends 20b and 20c may be mounted adjacent the second slot 26 (counted counter-clockwise in Figure 4) to provide a lower spring resistance to downward depression of the handle, or may as seen by way of example be mounted adjacent in slots 26 which increase the pre-tensioning of spring 26, for example the fourth slot 26 as seen in Figure 7b. This increases the spring resistance to downward force D on grips exerted by a rider riding in rough terrain results in rotation E of bracket 22 and handlebar 12 about axis of rotation 13 against the return biasing force of spring 20. For example an upward jolt in direction F would cause downward depression of grips 14a and 14b.

An upper limiting bolt 28 and a lower limiting bolt 30 are mounted vertically spaced apart in side plates 16c and 16d. Upper limiting bolt 28 and lower limiting bolt 30 contact handlebar torsion bracket 22. Top limiting bolt 28, limits the upward rotational travel of end 22a of bracket 22 and thus limits the rotation of handlebar 12 about axis 13. Lower limiting bolt 30 limits the lower rotational travel of end 22a and thus also limited the rotation of handlebar 12. Side plates 16c and 16d each have an adjustment slot 32. Lower limiting bolt 30 is mounted through the pair of adjustment slots 32.Lower limiting bolt 30 within the pair of adjustment slots 32 provides adjustment of the allowable downward rotational travel of the handlebar 12. Contact sleeves 28a and 30a are mounted on limiting bolts 28 and 30, where end 22a of torsion bracket 22 makes rotational contact with the bolts.

In the embodiment of Figure 1, handlebar grips 14a and 14b are releasably and lockably adjustable at desired angles, in a range from level, to vertically up or down, or in between at a forward tilting angle. Stop clamps 12a and 12b mounted on handlebar 12 take-up lateral force of handlebar 12 bearing against handlebar side plates 16c and 16d.

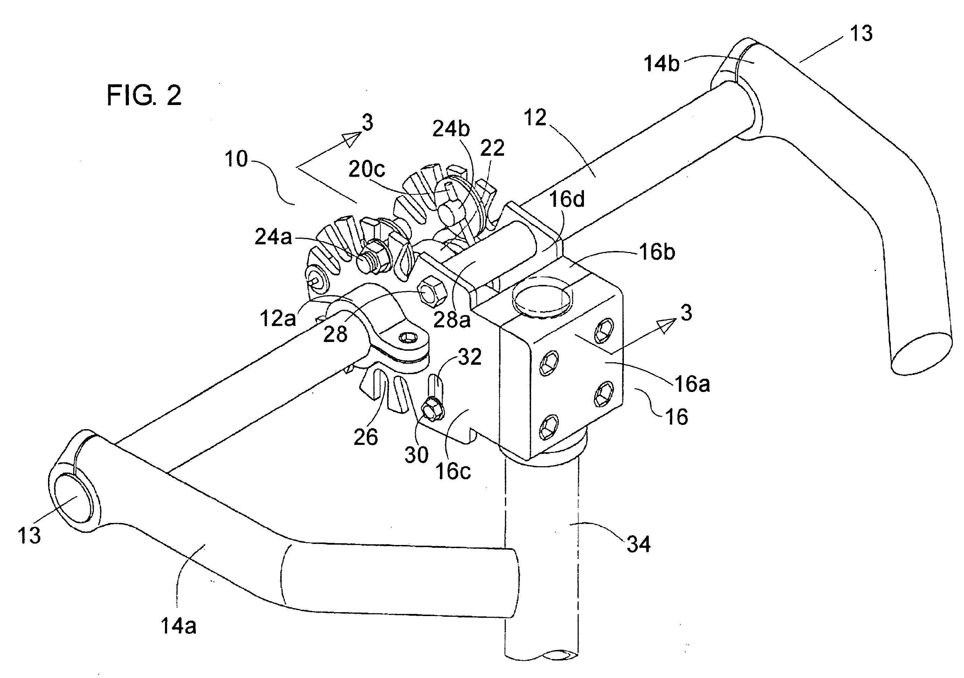

The handlebar shock-absorbing system 10 is shown assembled in a schematic view in Figure 2 where handlebar bracket 16 is installed onto a standard bicycle handlebar stem 34.

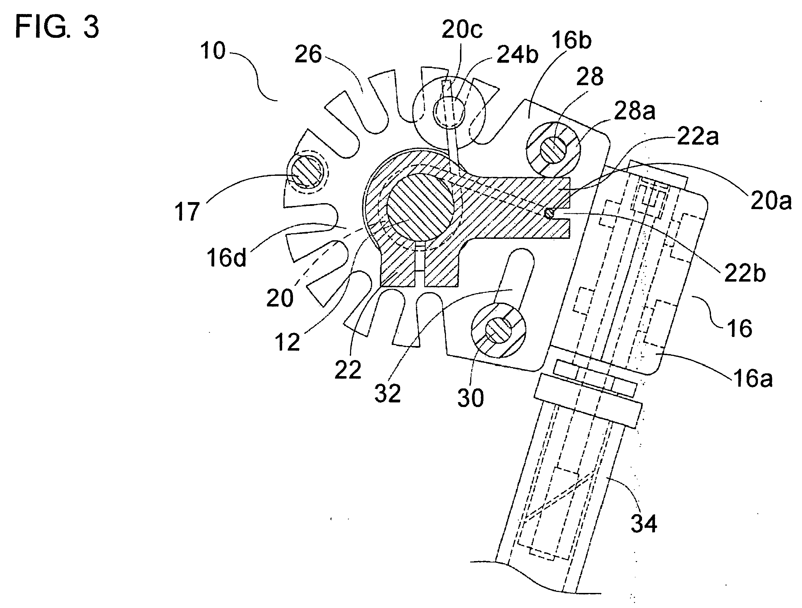

Figure 3 shows, in a sectional view, handlebar bracket 16 installed onto a standard bicycle handlebar stem 34. Handlebar 12 is at its resting position with end 22a of torsional bracket 22 at rest against top limiting bolt sleeve 28a.

Figure 4 shows in a sectional view, handlebar bracket 16 and shows a position of handlebar 12 at resting position with torsional bracket 22 at rest against top limiting bolt sleeve 28a.

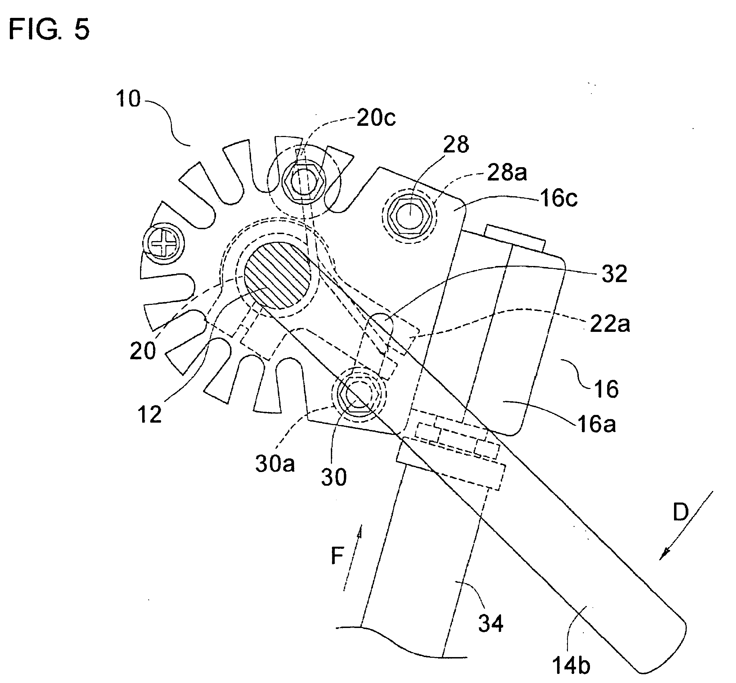

Figure 5 shows in a sectional view of handlebar bracket 16 and shows the position of handlebar 12 at torsional extension position with torsional bracket 22 at rest against bottom limiting bolt sleeve 30a.

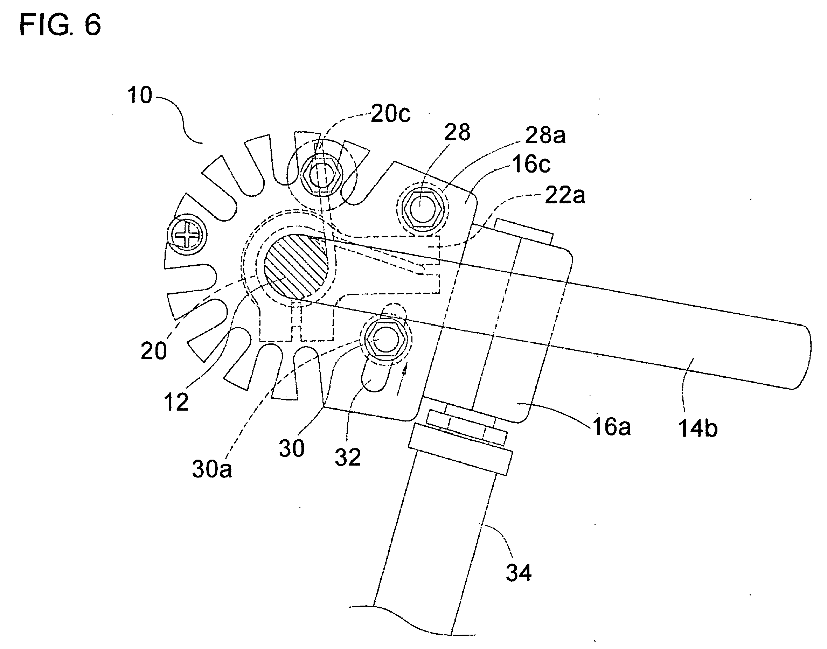

Figure 6 shows that limiting bolt 30 and sleeve 30a having been repositioned along the adjustment slot 32 of the side plates 16c and 16d to adjust the rotation range of handlebar 12.

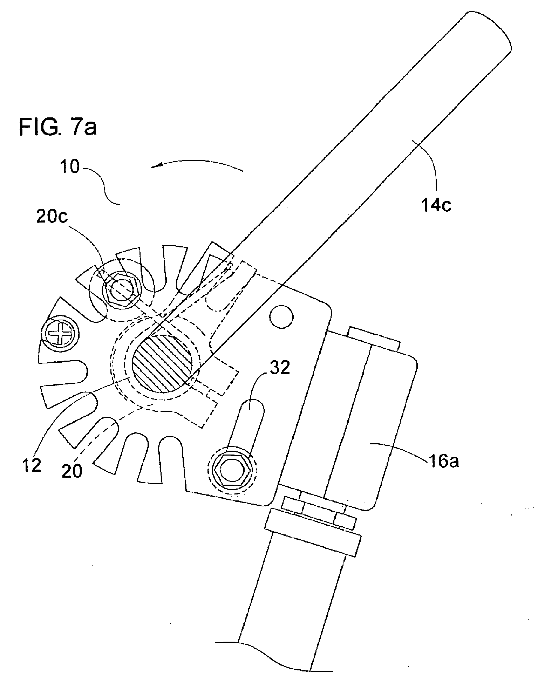

Figure 7a shows how tension adjustment of spring 20 is made where top limiting bolt 20 is removed, handlebar 12 is rotated upward to loosen spring 20 for relocation of spring positioning bolts 24a and 24b as shown completed in Figure 7b.

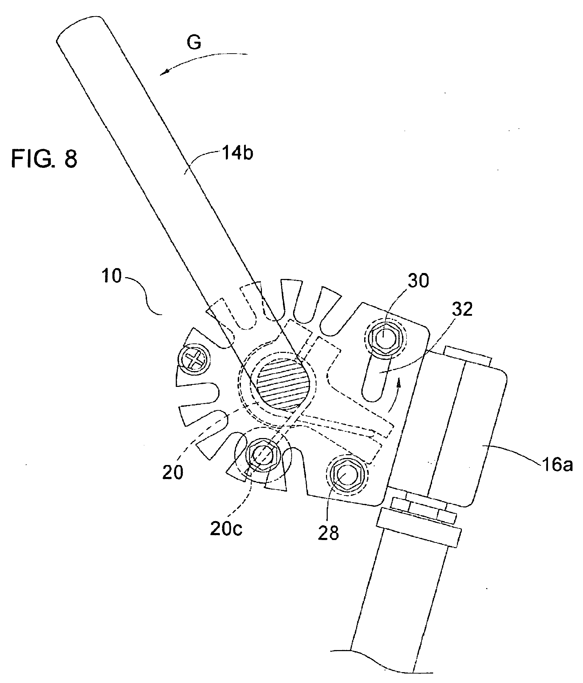

Figure 8 shows the handlebar grips 14a and 14b mounted so as to tilt forward. In this embodiment, the handlebar mounting bracket 16 is inverted so that limiting bolt 30 still is adjustable for the downward rotational range of the handlebars as they are rotated in direction G.

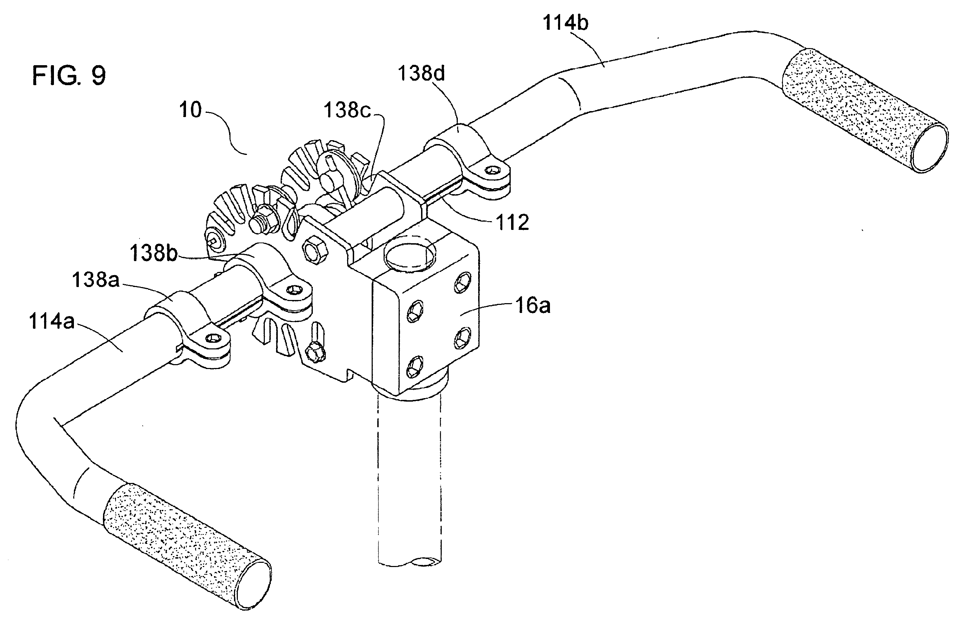

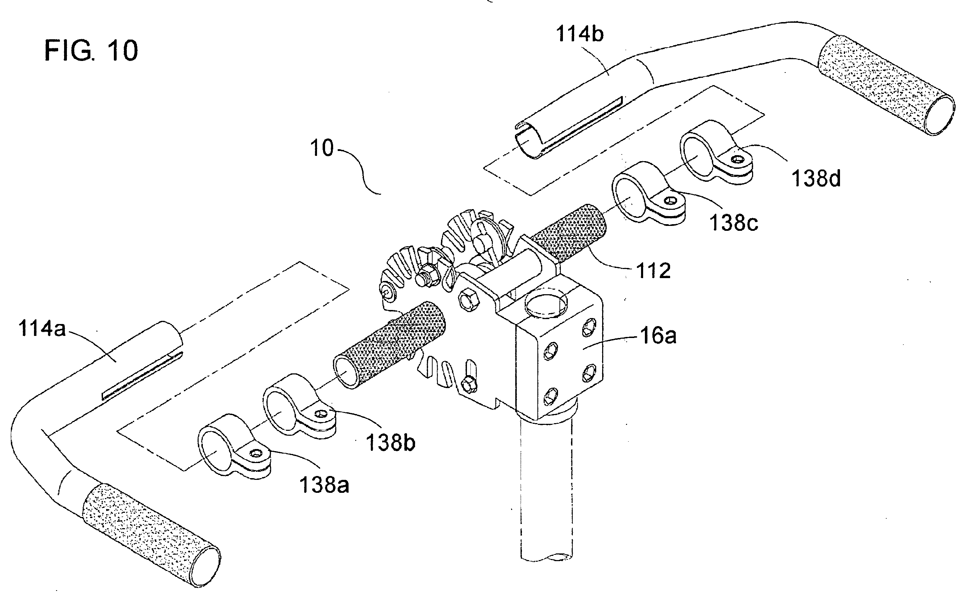

Figure 9 & Figure 10 show in perspective view and exploded perspective view, an alternate type of handlebar 112, with handlebar grips 114a and 114b. Handlebar grips 114a and 114b include handlebar grip clamps 138a, 138b, 138c and 138d.

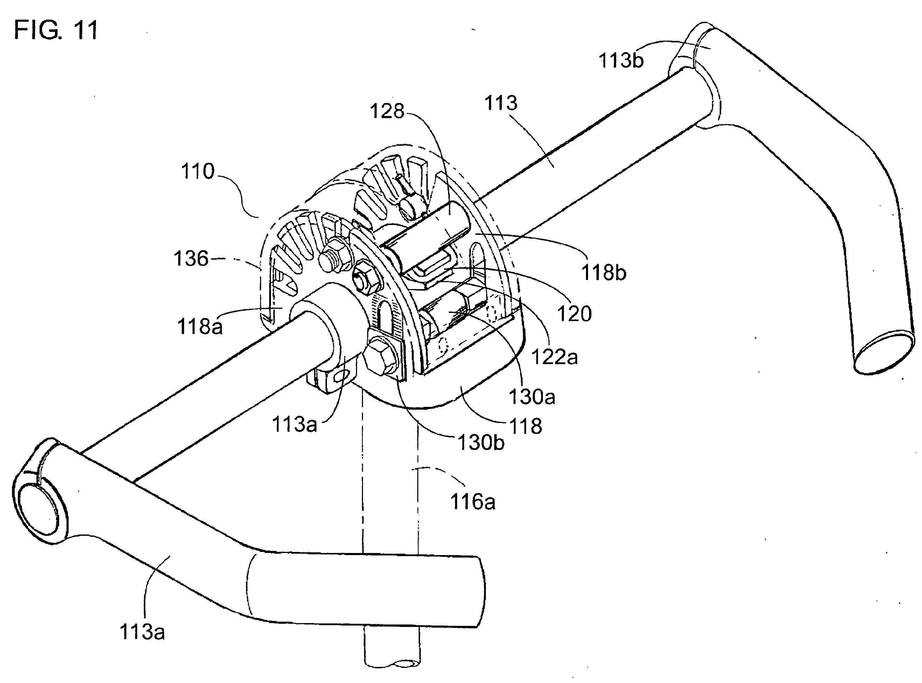

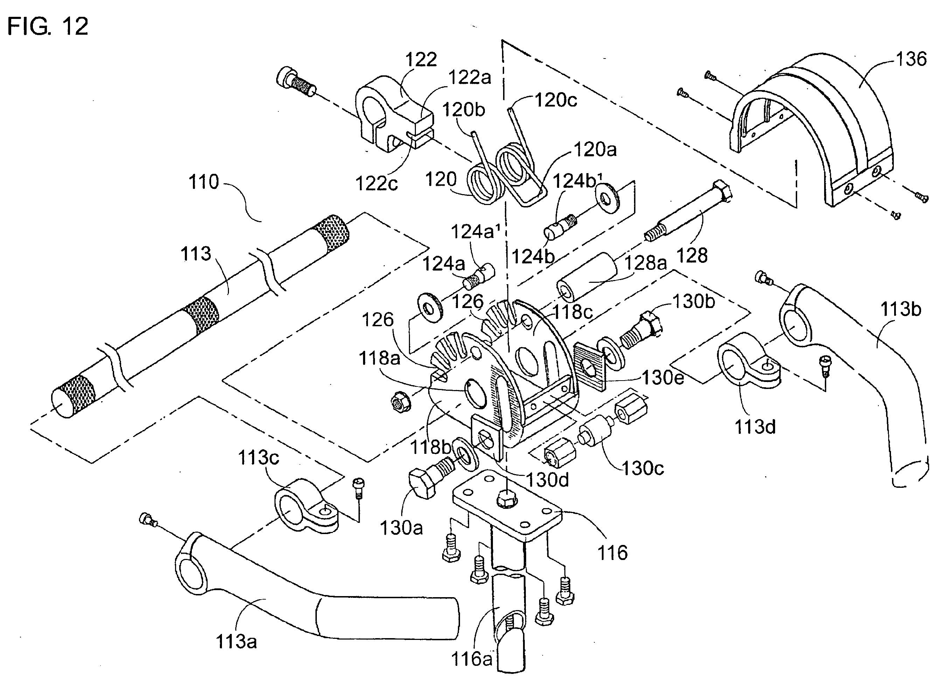

As shown in FIG. 11 an alternate handlebar shock-absorbing system is generally referred to as 110. As shown in FIG. 12 in exploded schematic view, one embodiment of the handlebar shock-absorbing system 110 includes a handlebar 113, a pair of handlebar grips 115a and 115b, and a handlebar stem mounting block 116. The stem handlebar mounting block 116 is attached to the top of a handlebar stem 116a.
A handlebar mounting bracket 118 attaches to handlebar mounting block 116. Handlebar 113 is pivotally or rotatably mounted to handlebar mounting bracket 118 through apertures 118a, one in each of two opposing parallel mounting plates 118b and 118c extending upwardly from handlebar mounting bracket 118. Torsion spring 120 is mounted between opposing side plates 118b and 118c. The torsion spring 120 is a helical coiled torsion spring, the spring is aligned and sized so as to slide over handlebar 113 when handlebar 113 is mounted through apertures 118a.

A handlebar torsion bracket 122 includes an adjoining end 122a cantilevered from the body of bracket 122. Handlebar torsion bracket 122 is rigidly mounted on handlebar 113, for example as illustrated set within torsion spring 120 so as to be sandwiched between ends 120b and 120c and corresponding helical segments of spring 120. An end 120a of spring 120 opposite to ends 120b and 120c is mounted into a slot 122b in the distal end of torsion bracket end 122a. Thus spring end 120a is rigidly anchored to handlebar 113 so that spring end 120a rotates as handlebar 113 is rotated about it's center, or axis of rotation. Spring ends 120b and 120c mount to spring positioning bolts 124a and 124b by journaling of ends 120b and 120c through apertures 124a' and 124b' respectively. Spring positioning bolts 124a and 124b are selectively mounted into one opposing pair of slots 126 in the radially spaced array of open slots 126 on side plates 118b and 118c radially spaced about center of handlebar axis. With spring ends 120b and 120c, mounted into apertures 124a' and 124b' in spring positioning bolts 124a and 124b, spring positioning bolts 124a and 124b may be slotted into any opposing pair of slots 126 to adjust desired spring tension of spring 120.

An upper limiting bolt 128 and a lower limiting bolt 130 are mounted vertically spaced apart in side plates 118b and 118c. Upper limiting bolt 128 and lower limiting bolt 130 contact handlebar torsion bracket 122. Top limiting bolt 128, limits the upward rotational travel of end 122a of bracket 122 and thus limits the rotation of handlebar 113. Lower limiting bolt 130 limits the lower rotational travel of end 122a and thus also limited the rotation of handlebar 113. Side plates 118b and 118c each have an adjustment slot 132. Lower limiting bolt 130 is mounted through the pair of adjustment slots 132. Lower limiting bolts 130a and 130b within the pair of adjustment slots 132 provides adjustment of the allowable downward rotational travel of the handlebar 113. Contact sleeves 128a and 130c are mounted on limiting bolts 128, 130a and 130b, where end 122a of torsion bracket 122 makes rotational contact with the bolt sleeves 128a and 130c. Lower limiting bolt includes gripping washers 130d and 130e.

Stop clamps 113c and 113d are mounted on handlebar 113 to take-up lateral force of handlebar 113 bearing against handlebar side mounting plates 118b and 118c. There is also a cover 136, which is attached to bracket 118.

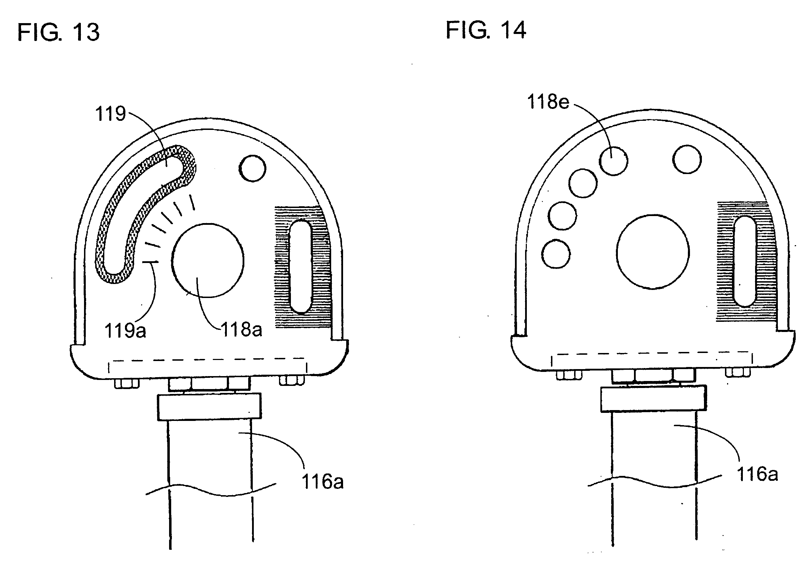

As seen in Figure 13 is a side view showing an alternate embodiment of Figure 11 showing alternate torsion spring adjustment means where the vertically spaced apart side plates 118b and 118c mounted to mounting block 118, which is attached directly on top of the bicycle stem 116a. In this embodiment side plates 118b and 118c have opposing radial slots 119 for fully variable adjustment. Opposing radial slots 119, include a scale 119a for keeping track of the tension position.

Figure 14 is a side view showing another alternate embodiment of Figure 11 showing a further alternate torsion spring adjustment means, where in this embodiment side plates 118b and 118c have opposing radial spaced adjustment holes 118e.

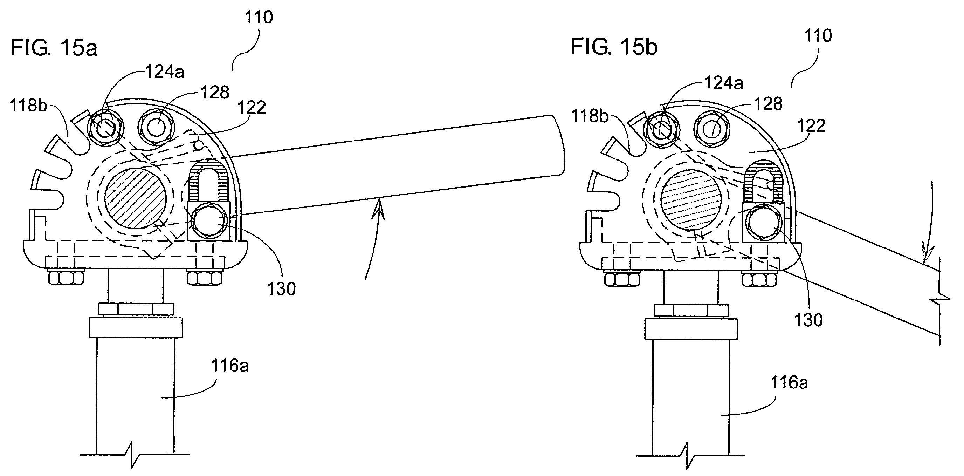

Figure 15a and 15b are side views showing the alternate embodiment of Figure 11 showing the rotation range of the handlebar against the return biasing force of the torsion spring where the shock absorbing mechanism is mounted directly on top of the bicycle stem and shown in the rearward facing position.

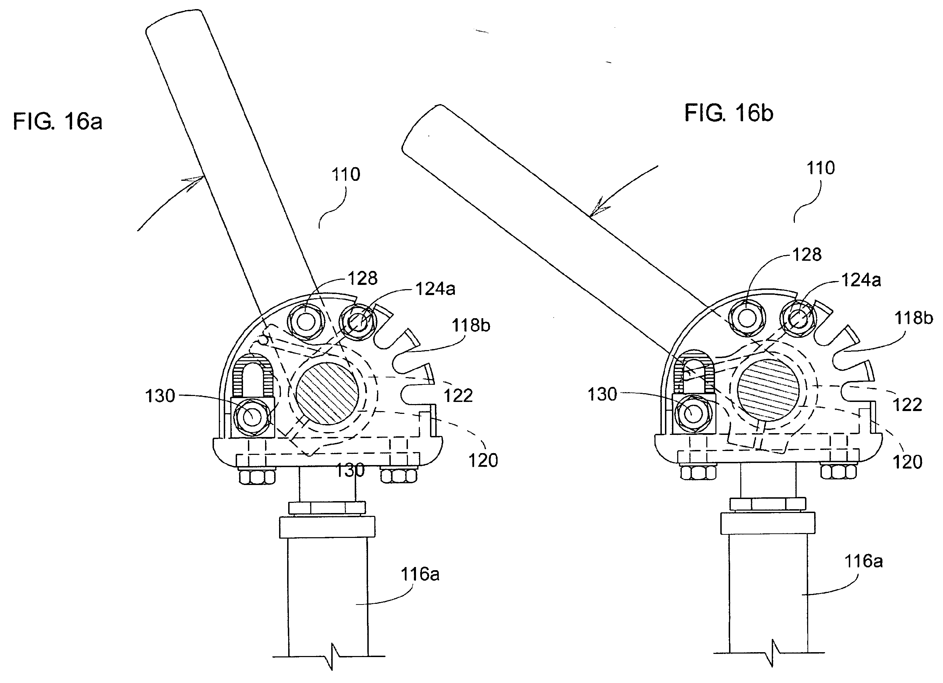

Figure 16a and 16b are side views showing the alternate embodiment of Figure 11 showing the rotation range of the handlebar against the return biasing force of the torsion spring where the shock absorbing mechanism is mounted directly on top of the bicycle stem and shown in the forward facing position.

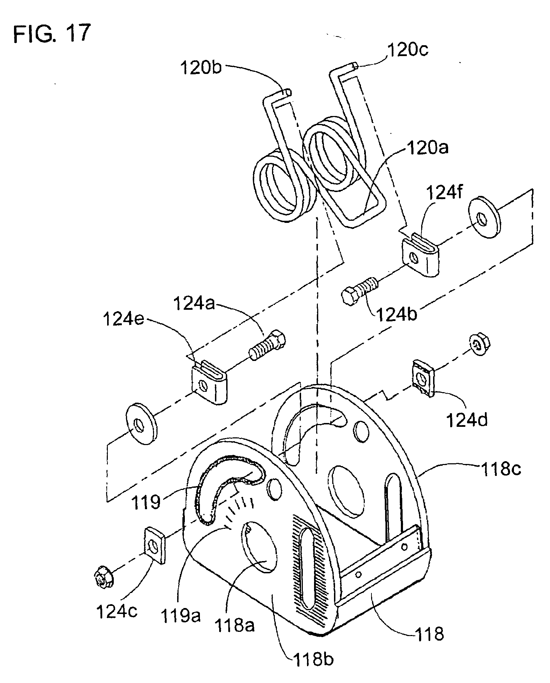

Figure 17 is a perspective view showing the alternate embodiment of Figure 13 showing the alternate torsion spring adjusting attachment mechanism for spring positioning bolts 124a and 124b. Spring positioning bolts 124a and 124b fit through opposing radial slots 119. Opposing radial slots 119 include a scale 119a to keep track of torsion spring 120 tension position. This method uses a slip-less washers 124c and 124d and torsion spring end clamps 124e and 124f. torsion spring end clamps 124e and 124f clamp over torsion spring ends 120b and 120c.

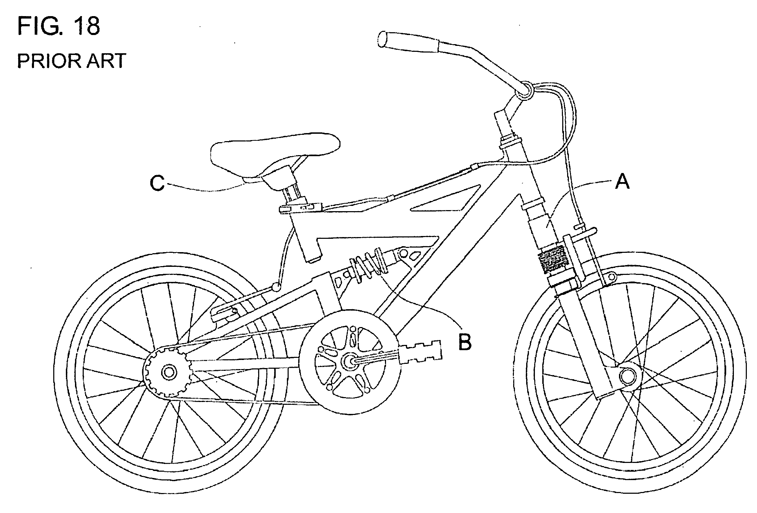

Prior art bicycle shock-absorbers are illustrated in Figure 18. These include springs and/or liquid type shock-absorbers within the front steering fork "A", under the seat "B" and under the top bike frame tube "C". It is understood that the present invention is not necessarily restricted to use with linear handlebars, bars having bull-horn style handlebar grips 14a and 14b, or grips 114a and 114b, but may also be employed with other, for example curved styles of handlebars such as, for example, the cruiser-style handlebars illustrated in Figure 11.

As will be apparent to those skilled in the art in the light of the foregoing disclosure, many alterations and modifications are possible in the practice of this invention without departing from the spirit or scope thereof. Accordingly, the scope of the invention is to be construed in accordance with the substance defined by the following claims.

## Claims

1. A handlebar shock absorbing system for bicycles, comprising:
a) a handlebar;
b) a pair of handlebar grips;
c) a handlebar mounting bracket;
d) a pair of side plates attached to said handlebar mounting bracket, having opposing apertures for rotatably mounting of said handlebar;
e) a releasable and lockable handlebar torsion bracket;
f) a helical torsion spring having at least two connecting ends;
g) and a means for adjusting said torsion spring force;
wherein said torsion spring is mounted to said handlebar torsion bracket at a first end of said torsion spring and said torsion spring is mounted at least one of said pair of side plates at an opposite second end of said torsion spring,
wherein said handlebar is journalled through said helical torsion spring.

2. A handlebar shock absorbing system of claim 1, where said mounting bracket side plates have a radial array of slots for adjustably connecting said torsion spring ends.

3. A handlebar shock absorbing system of claim 1, where said mounting bracket side plates have a pair of opposing radial slots for adjustably connecting said torsion spring ends.

4. A handlebar shock absorbing system of claim 1, where said mounting bracket side plates have a radial array of holes for adjustably connecting said torsion spring ends.

5. A handlebar shock absorbing system of claim 1, where said torsion spring ends are releasably adjustable and lockable with threaded fasteners.

6. A handlebar shock absorbing system of claim 1, where said mounting bracket side plates have a center axis hole for rotatable connection of said handlebar.

7. A handlebar shock absorbing system of claim 1, where said handlebar grips are releasably adjustable and lockable for said handlebar grips rotational positioning.

8. A handlebar shock absorbing system of claim 1, where said torsion bracket rotational limit is adjustable.

9. A handlebar shock absorbing system of claim 8, where said torsion bracket rotational limit is adjustable by a movable limiting stop in a slotted aperture within said mounting bracket side plates.

10. A handlebar shock absorbing system of claim 1, where said handlebar grips and said mounting bracket side plates are reversibly attachable for forward rotational tilting and opposite torsional function.

11. A handlebar shock absorbing system of claim 7, where said releasable handlebar grips are adaptable for attachment of a range of different handlebar grip styles.

12. A handlebar shock absorber comprising:
a handlebar pivotally mounted to a mounting bracket for rotation of said handlebar between a rest position and a depressed position, said mounting bracket rigidly mountable to the upper end of a handlebar stem, so that an axis of rotation of said handlebar is substantially co-axial with a longitudinal axis of said handlebar whereby rotation of said handlebar rotates said handlebar about said longitudinal axis, resilient biasing means mounted to, so as to cooperate between, said handlebar and said mounting bracket, said resilient biasing means resiliently biasing said handlebar into said rest position and resiliently urging said handlebar to return to said rest position when rotated towards said depressed position.

13. The device of claim 12 wherein said resilient biasing means is a torsion spring having first and second opposite ends, said first end rigidly mounted to said handlebar, said second end rigidly mounted to said mounting bracket.

14. The device of claim 13 wherein said second end of said spring is adjustably mountable to said mounting bracket, and said mounting bracket is adapted to receive said second end adjustably mounted thereto, along a range of selectively mountable mounting locations on said mounting bracket between a first mounting location wherein said spring is at a lower pre-tension and a second mounting location wherein said spring is at a higher pre-tension when said handlebar is in said rest position whereby spring resistance to rotation of said handlebar is selectively adjusted by mounting of said second end between said first and second mounting locations.

15. The device of claim 13 wherein said spring is a helical coil spring and said handlebar is journalled through said coil.

16. The device of claim 14 wherein said mounting locations on said mounting bracket are a radially spaced apart array of mounting locations radially spaced apart about said axis of rotation.

17. The device of claim 14 wherein said mounting locations on said mounting bracket have a radial slot for adjustably connecting said torsion spring ends

18. The device of claim 12 wherein said mounting bracket includes a U-shaped member and said spring is mounted sandwiched within said U-shaped member.

19. The device of claim 18 wherein a base of said U-shaped member is mountable to the handlebar stem and a pair of arms of said U-shaped member extending from said base sandwich said spring therebetween, and wherein said mounting locations are formed in at least one of the arms of said pair of arms.

20. The device of claim 19 wherein said mounting locations lies in a substantially vertical plane.

21. The device of claim 19 wherein said mounting locations are an array of radially extending slots.

22. The device of claim 19 wherein said mounting locations are a pair of radial slots.

23. The device of claim 13 further comprising a lever arm rigidly mounted to said handlebar, said first end of said torsion spring mounted to a distal end of said lever arm, distal from said handlebar.
